# EUROPEAN PATENT APPLICATION

(11) **EP 4 830 854 A1**
(43) Date of publication of application: **28.10.2026**
(21) Application number: 24907138.2
(22) Date of filing: 03.12.2024
(51) Int. Cl.: B23B 31/30, B23B 31/20

(54) **MACHINE TOOL**

(30) Priority: 21.12.2023 JP 2023215499
(71) Applicant: Star Micronics Co., Ltd., Shizuoka-shi, Shizuoka 422-8654 (JP)
(72) Inventor: SUGIMOTO Takashi, Shizuoka-shi, Shizuoka 422-8654 (JP)
(74) Representative: Grünecker Patent- und Rechtsanwälte PartG mbB
(86) International application number: PCT/JP2024/042609
(87) International publication number: WO 2025/134751

(57) **Abstract**

[Problem] Provided is a machine tool capable of estimating a gripping force on a workpiece with a high level of accuracy.

[Solution] The machine tool includes: a first spindle 4 that has a collet chuck 48 and that rotates; an air cylinder 32 that causes the collet chuck 48 to narrow by supplying air to a first pressure chamber 324 to move a piston 322 to one side, and causing the collet chuck 48 to widen by supplying air to a second pressure chamber 325 to move the piston 322 to the other side; a first pressure sensor 3261 that measures a first pressure that is a pressure of the air supplied to the first pressure chamber 324 when moving the piston 322 to the one side; a second pressure sensor 3271 that measures a second pressure that is a pressure of the air flowing out from the second pressure chamber 325 when moving the piston 322 to the other side; and an estimation unit 23 that estimates a gripping force of the collet chuck 48 on the basis of a differential pressure between the first pressure measured by the first pressure sensor 3261 and the second pressure measured by the second pressure sensor 3271.

## Description

### [Technical Field]

The present invention relates to a machine tool that machines a workpiece gripped by a spindle.

### [Background Art]

A machine tool that machines a rod-shaped workpiece gripped by a spindle capable of rotating about a spindle axis is known. The spindle is rotatably supported by a headstock. The spindle is provided with a gripping unit that grips the workpiece by narrowing in diameter and releases the grip on the workpiece by widening in diameter. The gripping unit is operated by an actuator fixed to the headstock (see, for example, PTL 1 and the like). In the machine tool according to PTL 1, a claw member is swung by a shifter displacing under the driving of the actuator, and a chuck sleeve moves along the spindle axis via a push sleeve to cause the gripping unit to grip or release the workpiece. A fluid pressure cylinder such as an air cylinder or a hydraulic cylinder may be used as the actuator.

In addition, a typical spindle is provided with an adjustment nut as adjustment means for adjusting the gripping force on a workpiece. This adjustment nut is attached to a spindle main body so as to be capable of rotating relative to the spindle main body, and is rotated to displace the position of the adjustment nut relative to the spindle main body in the spindle axis direction to change the gripping force on the workpiece. An operator of the machine tool adjusts the gripping force for the workpiece by inserting the workpiece to be machined next into a gripping unit, and rotating the adjustment nut relative to the spindle main body during what is known as setup work performed when machining a workpiece having a different diameter or a workpiece of a different material from that of the workpiece that has been machined up to that point. Furthermore, the operator of the machine tool manually operates a shifter lever for displacing a shifter, estimates the gripping force of the gripping unit from a force necessary for that operation, repeats the relative rotation of the adjustment nut and the estimation, and fixes the adjustment nut to the spindle main body at a position at which the force is the desired gripping force.

### [Citation List]

### [Patent Literature]

[PTL 1] Japanese Patent Application Publication No. 2020-97075

### [Summary of Invention]

### [Technical Problem]

However, the conventional adjustment method has a problem that the gripping force is estimated on the basis of the operator's senses, and the accuracy at which the gripping force is estimated is therefore low. In addition, after the adjustment in the setup work, the gripping force may change due to wear or thermal displacement of mechanisms between the gripping unit and fluid pressure cylinder, such as the shifter and the claw member, deterioration of rubber gaskets in the fluid cylinder, or variations in the diameters of the workpieces. For this reason, the gripping force on the workpiece during machining may differ from the gripping force estimated during the adjustment.

Having been conceived in light of the foregoing issue, an object of the present invention is to provide a machine tool capable of estimating a gripping force on a workpiece with a high level of accuracy.

### [Solution to Problem]

To address the above-described issue, a machine tool according to the present invention includes:
a spindle including a gripping unit that grips a workpiece by narrowing and releases a grip on the workpiece by widening, the spindle rotating with a spindle axis as a rotation center;
a fluid pressure cylinder including a first pressure chamber and a second pressure chamber partitioned by a piston, the fluid pressure cylinder causing the gripping unit to narrow by supplying a fluid to the first pressure chamber to move the piston to one side, and causing the gripping unit to widen by supplying a fluid to the second pressure chamber to move the piston to the other side;
a first pressure sensor that measures a first pressure that is a pressure of the fluid supplied to the first pressure chamber when moving the piston to the one side;
a second pressure sensor that measures a second pressure that is a pressure of the fluid flowing out from the second pressure chamber when moving the piston to the one side; and
an estimation unit that estimates a gripping force of the gripping unit on the basis of a differential pressure between the first pressure measured by the first pressure sensor and the second pressure measured by the second pressure sensor.

According to this machine tool, the gripping force is estimated on the basis of the differential pressure, which is the driving force that actually operates the fluid pressure cylinder, and the gripping force on the workpiece can therefore be estimated with a high level of accuracy.

Here, the spindle may have a claw member that swings to open and close the gripping unit and a shifter that swings the claw member by displacing along the spindle axis, and the fluid pressure cylinder may displace the shifter along the spindle axis by moving the piston to one side and the other side using fluid pressure. The spindle may also have adjustment means for adjusting the gripping force of the gripping unit on the workpiece. The estimation unit may estimate the gripping force of the gripping unit on the basis of the differential pressure when moving the piston to the one side. The machine tool may include conversion information storage means in which conversion information of the differential pressure and the gripping force is stored.

In this machine tool,
the estimation unit may estimate the gripping force on the basis of the differential pressure a predetermined time before a time when the piston reaches an arrival point on the one side.

Doing so makes it possible to simply store the differential pressure information for the predetermined time in storage means, which makes it possible to reduce the size of the storage region necessary for storing the information in the storage means.

Here, the fluid pressure cylinder may have an end sensor that detects that the piston has reached an arrival point on the one side. The arrival point may be the end of a stroke in which the piston rod has moved furthest to the one side. The machine tool may include a differential pressure information storage unit that sequentially stores the differential pressure. The estimation unit may obtain information of the differential pressure from the differential pressure information storage unit a predetermined time earlier. The estimation unit may estimate the gripping force on the basis of the differential pressure after the piston that was positioned on the other side begins to move toward the one side. In other words, the estimation unit may estimate the gripping force on the basis of the differential pressure after fluid begins being supplied to the first pressure chamber.

In this machine tool,
the estimation unit may estimate the gripping force on the basis of a maximum value of the differential pressure in a predetermined time range before a time when the piston reaches an arrival point on the one side.

Doing so makes it possible to more accurately estimate the gripping force.

Here, the estimation unit may obtain the information of the differential pressure from the differential pressure information storage unit in the predetermined time range.

In this machine tool,
the estimation unit may determine whether the differential pressure is within a predetermined range, and determine that a gripping force is abnormal if the differential pressure exceeds the predetermined range.

In this aspect, the operator of the machine tool can easily recognize an abnormal gripping force.

### [Advantageous Effects of Invention]

According to the present invention, a machine tool capable of estimating a gripping force on a workpiece with a high level of accuracy can be provided.

### [Brief Description of Drawings]

[Fig. 1] Fig. 1 is a plan view illustrating the internal configuration of an NC lathe according to an embodiment in a simplified manner.
[Fig. 2] Fig. 2 is a cross-sectional view illustrating a first headstock and a first spindle illustrated in Fig. 1 cut along a horizontal plane passing through a first spindle axis and seen from above.
[Fig. 3] Fig. 3 is an enlarged view of the first spindle illustrated in Fig. 2.
[Fig. 4] Fig. 4 is a perspective view of the first headstock and the first spindle illustrated in Fig. 1.
[Fig. 5] Fig. 5 is a cross-sectional view, similar to Fig. 2, illustrating the first headstock and the first spindle in a gripping state.
[Fig. 6] Fig. 6 is a pneumatic circuit diagram illustrating for changing a state of the first spindle illustrated in Fig. 1 between the gripping state and a released state.
[Fig. 7] Fig. 7 is a control block diagram of the NC lathe illustrated in Fig. 1.
[Fig. 8] Fig. 8 is a graph illustrating a differential pressure produced when the first spindle illustrated in Fig. 1 changes from the released state to the gripping state.

### [Description of Embodiments]

An embodiment of the present invention will be described below with reference to the drawings. The present embodiment will be described with reference to an example where the present invention is applied to a Swiss-type Numerical Control (NC) lathe.

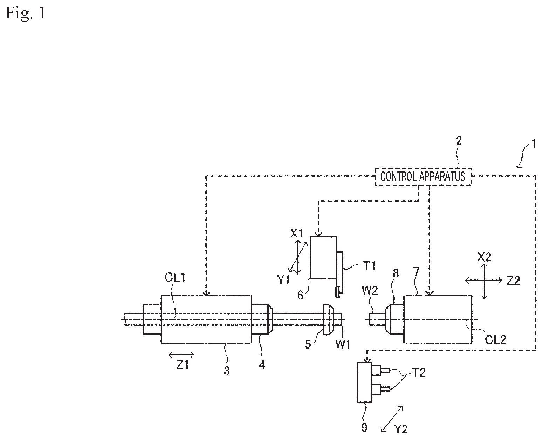

Fig. 1 is a plan view illustrating the internal configuration of an NC lathe 1 according to the present embodiment in a simplified manner.

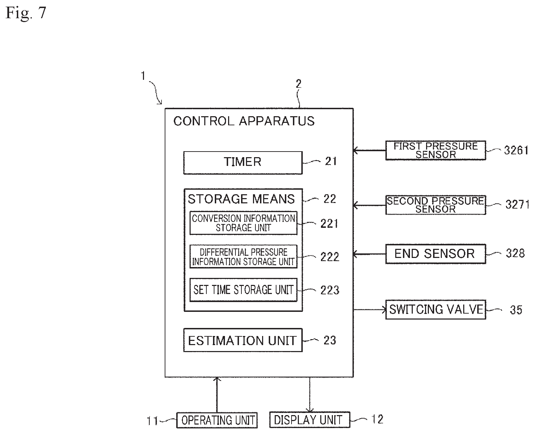

As illustrated in Fig. 1, a control apparatus 2, a first headstock 3, a first spindle 4, a guide bush 5, a first tool post 6, a second headstock 7, a second spindle 8, and a second tool post 9 are provided in the NC lathe 1. The control apparatus 2 is a computer that operates the first headstock 3, the first spindle 4, the first tool post 6, the second headstock 7, the second spindle 8, and the second tool post 9 in accordance with an NC program. In addition to operations using the NC program, the NC lathe 1 can be operated by directly inputting commands to the control apparatus 2 from an operating unit 11 (see Fig. 7).

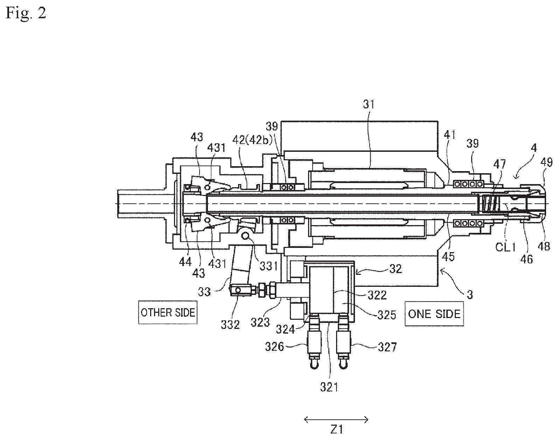

The first headstock 3 moves in a Z1-axis direction along with the first spindle 4 in response to signals from the control apparatus 2. The Z1-axis direction is a horizontal direction, and is the left-right direction in Fig. 1. The first spindle 4 is rotatably mounted on the first headstock 3. A first spindle motor 31 (see Fig. 2) is provided between the first spindle 4 and the first headstock 3. When the first spindle motor 31 rotates in response to signals from the control apparatus 2, the first spindle 4 rotates about a first spindle axis CL1. The direction of the first spindle axis CL1 matches the Z1-axis direction.

The first spindle 4 changes state between a gripping state, in which a long rod-shaped workpiece W1 inserted into the interior thereof is gripped, and a released state, in which the grip on the workpiece W1 is released, in response to signals from the control apparatus 2. The first spindle 4 corresponds to an example of a spindle. When the first spindle motor 31 (see Fig. 2) rotates in response to signals from the control apparatus 2, the workpiece W1 gripped by the first spindle 4 rotates about the first spindle axis CL1 along with the first spindle 4. The configurations of the first headstock 3 and the first spindle 4 will be described in detail later.

The guide bush 5 is fixed to a leg of the NC lathe 1, which is a base. The guide bush 5 supports a distal end portion of the workpiece W1, which is inserted into the interior of the first spindle 4 and has a distal end protruding from the first spindle 4, to be capable of sliding in the Z1-axis direction. The portion of this guide bush 5 that supports the workpiece W1 can rotate about the first spindle axis CL1 in synchronization with the first spindle 4. In other words, the first spindle axis CL1 is also the rotation center axis of the part of the workpiece W1 that is supported by the guide bush 5. Providing the guide bush 5 suppresses warping of the workpiece W1 during machining, which makes it possible to accurately machine the long and thin workpiece W1 in particular.

The first tool post 6 is capable of moving in an X1-axis direction perpendicular to the Z1-axis direction and oriented in the horizontal direction, and in a Y1-axis direction oriented in the vertical direction. The first tool post 6 moves in the X1-axis direction and the Y1-axis direction in response to signals from the control apparatus 2. In Fig. 1, the up-down direction is the X1-axis direction, and a direction perpendicular to the paper surface is the Y1-axis direction. The first spindle tool T1 for machining the workpiece W1 is attached to the first tool post 6. Fig. 1 illustrates the first spindle tool T1 attached to the first tool post 6. A plurality of types of the first spindle tools T1, including a cutting tool for outer diameter machining, a cutting tool for cut-off machining, and the like are attached to the first tool post 6 side-by-side in the Y1-axis direction. When the first tool post 6 moves in the Y1-axis direction, a desired first spindle tool T1 is selected from the plurality of types of first spindle tools T1. Furthermore, when the first tool post 6 moves in the X1-axis direction, the selected first spindle tool T1 cuts into the workpiece W1 gripped by the first spindle 4 to machine the workpiece W1.

The second headstock 7 moves in an X2-axis direction along with the second spindle 8 and a Z2-axis direction along with the second spindle 8 in response to signals from the control apparatus 2. The X2-axis direction is the same direction as the X1-axis direction described above, and the Z2-axis direction is the same direction as the Z1-axis direction described above. A second spindle motor (not shown) such as a built-in motor is provided in the second headstock 7. When the second spindle motor rotates in response to signals from the control apparatus 2, the second spindle 8 rotates about the second spindle axis CL2. The direction of the second spindle axis CL2 matches the Z2-axis direction.

A cut-off workpiece W2 that has been machined using the first spindle 4 and cut by the cutting tool for cut-off machining is passed to the second spindle 8. The second spindle 8 changes states between a gripping state where the cut-off workpiece W2 passed from the first spindle 4 is gripped, and a released state where the grip on the cut-off workpiece W2 is released. The second spindle 8 also corresponds to an example of a spindle. When the second spindle motor rotates in response to signals from the control apparatus 2, the workpiece W2 gripped by the second spindle 8 rotates about the second spindle axis CL2 along with the second spindle 8.

The second tool post 9 moves in a Y2-axis direction in response to signals from the control apparatus 2. The Y2-axis direction is the same direction as the Y1-axis direction mentioned above, i.e., the vertical direction. A plurality of second spindle tools T2 that machine the cut-off workpiece W2 gripped by the second spindle 8 are attached to the second tool post 9. Fig. 1 illustrates the second spindle tool T2 attached to the second tool post 9. The plurality of types of second spindle tools T2, such as a drill and an endmill, are attached to the second tool post 9. Although not illustrated in Fig. 1, the second spindle tools T2 are attached side-by-side not only in the X2-axis direction but also in the Y2-axis direction. When the second headstock 7 moves in the X2-axis direction and the second tool post 9 moves in the Y2-axis direction, a desired second spindle tool T2 is selected from the plurality of types of second spindle tools T2. Furthermore, when the second headstock 7 moves in the Z2-axis direction, a cut end side portion of the cut-off workpiece W2 gripped by the second spindle 8 is machined.

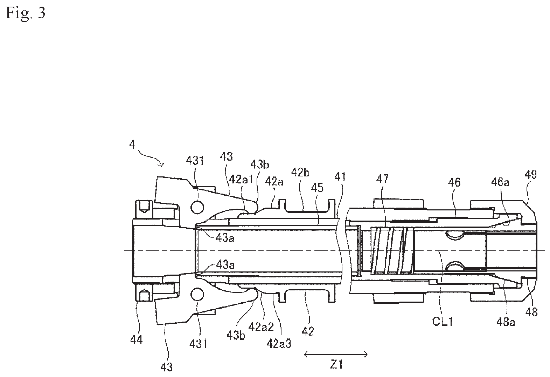

Fig. 2 is a cross-sectional view illustrating the first headstock 3 and the first spindle 4 illustrated in Fig. 1 cut along a horizontal plane passing through the first spindle axis CL1 and seen from above. Fig. 3 is an enlarged view of the first spindle 4 illustrated in Fig. 2. Figs. 2 and 3 illustrate the first headstock 3 and the first spindle 4 in the released state. Note that in Figs. 2 and 3, hatching indicating the cross-section has not been added.

As illustrated in Fig. 2, the first spindle 4 has a generally cylindrical shape having an axis in the direction of the first spindle axis CL1. The first spindle 4 is rotatably supported in the first headstock 3 by a bearing 39. The first spindle 4 includes a spindle main body 41, a shifter 42, claw members 43, an adjustment nut 44, a push sleeve 45, a chuck sleeve 46, a coil spring 47, a collet chuck 48, and a spindle cap 49. This collet chuck 48 corresponds to an example of a gripping unit.

The spindle main body 41 is a cylinder that extends in the Z1-axis direction, and serves as a base for the first spindle 4. The shifter 42 is disposed on a rear end side of the first spindle 4. The shifter 42 is generally cylindrical, and is attached to the spindle main body 41 so as to be capable of sliding in the Z1-axis direction by an inner circumferential surface thereof sliding along the outer circumferential surface of the spindle main body 41. Note that in Figs. 2 and 3, the left side of the figures corresponds to the rear end side of the first spindle 4. As illustrated in Fig. 3, a cam surface 42a and a groove 42b are formed in an outer circumferential surface of the shifter 42. The cam surface 42a is constituted by a small diameter surface 42a1 having a constant outer diameter that is the smallest, a varying surface 42a2 having an outer diameter that increases gradually, and a large diameter surface 42a3 having a constant outer diameter that is the largest, in that order from the rear end side of the first spindle 4. The shifter 42 is slid in the Z1-axis direction by an air cylinder 32 (see Fig. 2) whose operations are controlled by the control apparatus 2 (see Fig. 1). Figs. 2 and 3 illustrate the shifter 42 positioned in an initial position, which is furthest on the distal end side of the first spindle 4. Note that in Figs. 2 and 3, the right side of the figures corresponds to the distal end side of the first spindle 4.

Two of the claw members 43 are attached to the spindle main body 41 so as to be capable of swinging about a claw shaft 431. A claw distal end portion 43b that acts as a cam follower that contacts the cam surface 42a of the shifter 42 is formed in the distal end portion of the claw member 43, and when the claw distal end portion 43b moves toward or away from the first spindle axis CL1 along the cam surface 42a in response to sliding movement of the shifter 42, the claw member 43 swings with the claw shaft 431 as the center of the swinging. A sleeve push portion 43a is formed on the claw member 43, and this sleeve push portion 43a is in contact with the rear end of the push sleeve 45.

The adjustment nut 44 is threaded onto the spindle main body 41 at a rearmost end portion of the first spindle 4. This adjustment nut 44 corresponds to an example of adjustment means. A female screw is formed on the inner side of the adjustment nut 44, and threads with a male screw formed at the rear end portion of the spindle main body 41. By rotating the adjustment nut 44 in a tightening direction, the claw member 43, the push sleeve 45, and the chuck sleeve 46 move toward the distal end side of the first spindle 4 together with the adjustment nut 44. Through this, the inner diameter of the collet chuck 48 in the gripping state becomes relatively small, and the gripping force of the first spindle 4 on the workpiece W1 increases. Conversely, by rotating the adjustment nut 44 in a loosening direction, the claw member 43, the push sleeve 45, and the chuck sleeve 46 move toward the rear end side of the first spindle 4 together with the adjustment nut 44. Through this, the inner diameter of the collet chuck 48 in the gripping state becomes relatively large, and the gripping force of the first spindle 4 on the workpiece W1 decreases. In other words, the gripping force of the first spindle 4 on the workpiece W1 is adjusted by the adjustment nut 44. The adjustment nut 44 has a C shape having a notch along the radial direction when seen from the rear end side toward the distal end side of the first spindle 4, and the width of this notch portion can be changed by a screw (not shown). After the adjustment of the gripping force using the adjustment nut 44 is completed, the adjustment nut 44 is fixed to the spindle main body 41 at an adjusted position by narrowing the notch portion using the screw. Note that the gripping force of the first spindle 4 on the workpiece W1 may be configured to be adjusted using adjustment means other than the adjustment nut 44.

The push sleeve 45 is a cylindrical body disposed inside of the spindle main body 41, and the distal end thereof is in contact with a rear end portion of the chuck sleeve 46. The push sleeve 45 and the chuck sleeve 46 move in a direction opposite from the shifter 42 when the shifter 42 moves in the Z1-axis direction. More specifically, when the shifter 42 slides toward the rear end side of the first spindle 4, the claw distal end portion 43b of the claw member 43 is pushed up by the cam surface 42a of the shifter 42, and moves in a direction away from the first spindle axis CL1. As a result, the claw member 43 on the upper side in Fig. 3 swings counterclockwise with the claw shaft 431 as the swinging center, the claw member 43 on the lower side in Fig. 3 swings clockwise, the push sleeve 45 and the chuck sleeve 46 are pushed against the sleeve push portion 43a of the claw member 43 and move to the distal end side of the first spindle 4. During the process where the claw distal end portion 43b is pushed up by the cam surface 42a of the shifter 42, the collet chuck 48 is most closed at the moment when the contact point between the claw distal end portion 43b and the cam surface 42a reaches a boundary point between the varying surface 42a2 and the large diameter surface 42a3, and the first spindle 4 enters the gripping state. Then, when the workpiece W1 (see Fig. 1) is in the collet chuck 48, the force of the air cylinder 32 (see Fig. 2) at that moment is substantially proportional to the gripping force of the grip on the workpiece W1. At this time, the force of the air cylinder 32 is based on the differential pressure of air supplied to a first pressure chamber 324 (see Fig. 2) and the pressure of air discharged from a second pressure chamber 325 (see Fig. 2), and the differential pressure at the stated moment is therefore substantially proportional to the gripping force on the workpiece W1. Hereinafter, the differential pressure at the moment when the contact point between the claw distal end portion 43b and the cam surface 42a reaches the boundary point between the varying surface 42a2 and the large diameter surface 42a3 may be referred to as an effective differential pressure.

Conversely, when the shifter 42 slides toward the distal end side of the first spindle 4, the claw distal end portion 43b of the claw member 43 moves along the cam surface 42a of the shifter 42 in a direction toward the first spindle axis CL1. Through this, the claw member 43 on the upper side in Fig. 3 swings clockwise with the claw shaft 431 as the swinging center, the claw member 43 on the lower side in Fig. 3 swings counterclockwise, and the push sleeve 45 and the chuck sleeve 46 move to the rear end side of the first spindle 4.

The coil spring 47 continually pushes the chuck sleeve 46 toward the rear end side, and continually pushes the collet chuck 48 toward the distal end side. Through this, the push sleeve 45 is also pushed toward the rear end side via the chuck sleeve 46, and the rear end of the push sleeve 45 pushes the sleeve push portion 43a toward the rear end side.

A distal end portion inner circumferential surface 46a of the chuck sleeve 46 is a tapered surface having a diameter that becomes larger with proximity to the distal end side. The collet chuck 48 is configured to be capable of widening and narrowing in a radial direction orthogonal to the first spindle axis CL1. A distal end portion outer circumferential surface 48a of the collet chuck 48 is a tapered surface having a diameter that increases with proximity to the distal end side. The collet chuck 48 includes a total of three slots formed thereon every 120°, continuing from the distal end to a hole formed in the vicinity of the center in the Z1-axis direction, and separated in a circumferential direction. These holes and slots make it possible to widen and narrow the distal end side of the collet chuck 48 in particular in the radial direction. Because the chuck sleeve 46 is positioned on the rear end side in the released state illustrated in Figs. 2 and 3, the distal end portion inner circumferential surface 46a of the chuck sleeve 46 puts almost no pushing force on the distal end portion outer circumferential surface 48a inward in the radial direction, and the distal end side of the collet chuck 48 widens in the radial direction under its own elasticity.

The spindle cap 49 is a bowl-shaped member including a circular cap through-hole formed at a center portion and penetrating in the Z1-axis direction. When a distal end surface of the collet chuck 48 comes into contact with a portion corresponding to a bottom part of this bowl shape, the spindle cap 49 regulates movement of the collet chuck 48 toward the distal end side. The collet chuck 48 is constantly pressed against the spindle cap 49 by being pushed by the coil spring 47. The spindle cap 49 is fixed to the spindle main body 41 when a female screw part formed on an inner side of an edge part of this bowl shape is threaded onto a male screw part formed in a distal end portion of the spindle main body 41.

As illustrated in Fig. 2, the first headstock 3 includes a first spindle motor 31, the air cylinder 32, and a shifter lever 33. The first spindle motor 31 is a built-in motor provided in the first headstock 3. As described above, by rotating driving the first spindle motor 31, the first spindle 4 rotates about the first spindle axis CL1 supported by the first headstock 3 via the bearing 39.

The air cylinder 32 includes a cylinder tube 321, a piston 322, and a piston rod 323. This air cylinder 32 corresponds to an example of a fluid pressure cylinder. The air supplied to the air cylinder 32 corresponds to an example of a fluid. Note that a fluid hydraulic cylinder such as an oil hydraulic cylinder may be used instead of the air cylinder 32. The cylinder tube 321 is a housing for the air cylinder 32 and has a cylindrical shape. The piston 322 is disposed in the cylinder tube 321 in contact with the inner circumferential surface of the cylinder tube 321 so as to be capable of moving to one side and the other side. This piston 322 partitions the interior of the cylinder tube 321 into the first pressure chamber 324 and the second pressure chamber 325.

The piston rod 323 has a bar shape with one end fixed to the piston 322. The other end of the piston rod 323 is connected to the shifter lever 33.

The air cylinder 32 is provided with a first port 326 that is connected to the first pressure chamber 324 and supplies air to the first pressure chamber 324, and a second port 327 that is connected to the second pressure chamber 325 and supplies air to the second pressure chamber 325. By supplying air to the first pressure chamber 324 and exhausting the air from the second pressure chamber 325, the piston 322 moves to one side, and the length of the advancement of the piston rod 323, which has advanced from the cylinder tube 321 to the other side, is shortened. In addition, by supplying air to the second pressure chamber 325 and exhausting the air from the first pressure chamber 324, the piston 322 moves to the other side, and the length of the advancement of the piston rod 323, which has advanced from the cylinder tube 321 to the other side, is lengthened. Fig. 2 illustrates the piston 322 having moved to the other side the most and the length of the advancement of the piston rod 323 increasing.

The shifter lever 33 is capable of swinging about a lever shaft 331 as the swinging center. One end of the shifter lever 33 is rotatably connected to the other end of the piston rod 323 by a connection pin 332. The other end of the shifter lever 33 fits into the groove 42b of the shifter 42. By driving the air cylinder 32, the shifter lever 33 swings, and this swinging slides the shifter 42 in the Z1-axis direction. The air cylinder 32, shifter lever 33, shifter 42, claw members 43, push sleeve 45, chuck sleeve 46, coil spring 47, and collet chuck 48 described above form a collet opening/closing mechanism that widens and narrows the collet chuck 48.

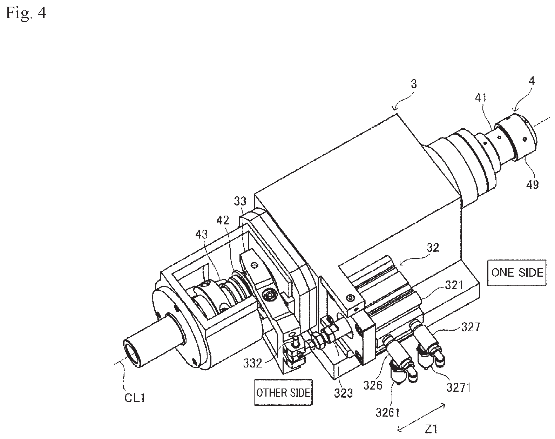

Fig. 4 is a perspective view of the first headstock 3 and the first spindle 4 illustrated in Fig. 1. Fig. 4 illustrates the first headstock 3 and the first spindle 4 in the released state.

As illustrated in Fig. 4, the first port 326 of the air cylinder 32 is provided with a first pressure sensor 3261 that measures the pressure of the air supplied to the first pressure chamber 324 (see Fig. 2) or discharged from the first pressure chamber 324. Hereinafter, the pressure of the air measured by the first pressure sensor 3261 may be referred to as a first pressure. The second port 327 of the air cylinder 32 is provided with a second pressure sensor 3271 that measures the pressure of the air supplied to the second pressure chamber 325 (see Fig. 2) or discharged from the second pressure chamber 325. Hereinafter, the pressure of the air measured by the second pressure sensor 3271 may be referred to as a second pressure. By supplying air to the first pressure chamber 324 through the first port 326, the piston 322 (see Fig. 2) moves to one side and the collet chuck 48 (see Fig. 2) narrows, and the first spindle 4 changes from the released state illustrated in Figs. 2 to 4 to the gripping state.

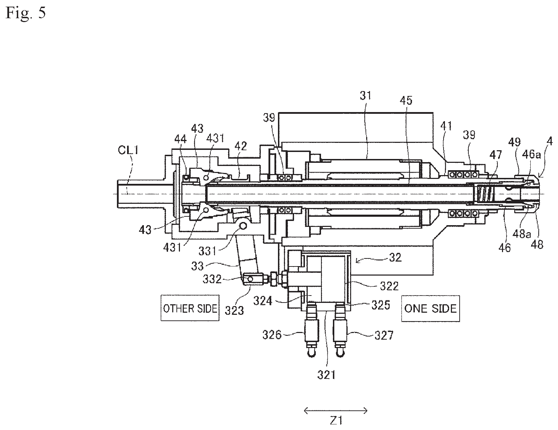

Fig. 5 is a cross-sectional view, similar to Fig. 2, illustrating the first headstock 3 and the first spindle 4 in the gripping state. Note that in Fig. 5, hatching indicating the cross-section has not been added.

As described above, when air is supplied to the first pressure chamber 324, the air that was previously in the second pressure chamber 325 is pushed out and exhausted through the second port 327, and the piston 322 moves to one side. As a result, as illustrated in Fig. 5, the advancement length of the piston rod 323 is shortened, the shifter 42 slides to the rear end side of the first spindle 4, the claw distal end portion 43b moves away from the first spindle axis CL1, and the push sleeve 45 and the chuck sleeve 46 move toward the distal end side of the first spindle 4. The distal end side of the collet chuck 48 narrows in the radial direction against the elasticity of the collet chuck 48 itself, due to the tapered surface on the distal end portion inner circumferential surface 46a of the chuck sleeve 46 and the tapered surface on the distal end portion outer circumferential surface 48a of the collet chuck 48, and the first spindle 4 enters the gripping state of gripping the workpiece W1 (see Fig. 1).

Conversely, when air is supplied to the second pressure chamber 325, the air that had been in the first pressure chamber 324 is pushed out and exhausted through the first port 326, and the piston 322 moves to the other side. As a result, as illustrated in Fig. 2, the advancement length of the piston rod 323 increases, and the shifter 42 slides toward the distal end side of the first spindle 4. Then, due to the restorative force of the coil spring 47, the push sleeve 45 and the chuck sleeve 46 move toward the rear end side of the first spindle 4, the claw member 43 swings, and the claw distal end portion 43b approaches the first spindle axis CL1. The force with which the distal end portion inner circumferential surface 46a of the chuck sleeve 46 pushes the distal end portion outer circumferential surface 48a of the collet chuck 48 in the radial direction decreases or disappears, the distal end side of the collet chuck 48 widens in the radial direction due to the elasticity of the collet chuck 48 itself, and the first spindle 4 enters the released state that releases the grip on the workpiece W1 (see Fig. 1).

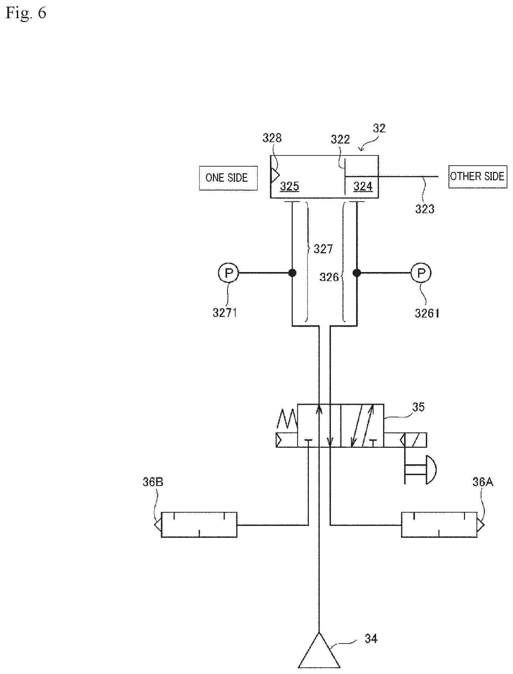

Fig. 6 is a pneumatic circuit diagram illustrating for changing a state of the first spindle 4 illustrated in Fig. 1 between the gripping state and a released state.

As illustrated in Fig. 6, the air cylinder 32 includes an end sensor 328. The end sensor 328 detects that the piston 322 has moved furthest to the one side and transmits an arrival signal to the control apparatus 2 (see Fig. 1). The air driving the air cylinder 32 is supplied from a pressure source 34 installed at the factory or the like where the NC lathe 1 (see Fig. 1) is installed. The pressure source 34 is, for example, an air compressor. The destination of the air supplied from the pressure source 34 is switched to one of the first pressure chamber 324 and the second pressure chamber 325 by a switching valve 35, the switching of which is controlled by the control apparatus 2. Fig. 6 illustrates a state in which air is being supplied to the second pressure chamber 325.

The switching valve 35 switches the destination of the air supplied from the pressure source 34 in response to a switching signal from the control apparatus 2, and switches the destination of the air exhausted from the air cylinder 32 to one of a first exhaust port 36A and a second exhaust port 36B. In the present embodiment, when air is supplied from the pressure source 34 to the first pressure chamber 324 and the piston 322 moves to the one side, the air that was in the second pressure chamber 325 is exhausted from the second exhaust port 36B. Conversely, when air is supplied from the pressure source 34 to the second pressure chamber 325 and the piston 322 moves to the other side, the air that was in the first pressure chamber 324 is exhausted from the first exhaust port 36A. Note that a silencer for reducing exhaust noise is provided in each of the first exhaust port 36A and the second exhaust port 36B.

As described above, the first pressure sensor 3261 measures an air pressure that is the pressure of a fluid in the first port 326 immediately before the first pressure chamber 324. The second pressure sensor 3271 measures an air pressure that is the pressure of a fluid in the second port 327 immediately before the second pressure chamber 325. However, the first pressure sensor 3261 may be disposed anywhere as long as the air pressure between the switching valve 35 and the first pressure chamber 324 can be measured. Likewise, the second pressure sensor 3271 may be disposed anywhere as long as the air pressure between the switching valve 35 and the second pressure chamber 325 can be measured.

Fig. 7 is a control block diagram illustrating the control configuration of the NC lathe 1 illustrated in Fig. 1 in relation to the present invention.

As illustrated in Fig. 7, the NC lathe 1 includes the operating unit 11 and a display unit 12 as interfaces for an operator. The operating unit 11 is an input apparatus for operating the NC lathe 1. The operating unit 11 includes a plurality of buttons, keys, and the like for accepting input operations performed by the operator of the NC lathe 1. Note that the operating unit 11 may be also a touch panel that is integrated with the display unit 12. The display unit 12 is a display that displays various information related to the NC lathe 1, such as NC programs, various setting values, error details, estimation results from an estimation unit 23 (described later), and the like.

The control apparatus 2 includes a timer 21, storage means 22, and the estimation unit 23. The timer 21 is used to measure the passage of time. The timer 21 measures, for example, a time elapsed after the NC lathe 1 is powered on, and a time elapsed from a point of time at which a predetermined operation is started.

The storage means 22 stores control programs, NC programs, various information, and the like, and includes a non-volatile memory and a volatile memory. The storage means 22 includes a conversion information storage unit 221, a differential pressure information storage unit 222, and a set time storage unit 223.

The conversion information storage unit 221 illustrated in Fig. 7 is a function unit in which a relationship between the gripping force on the workpiece W1 by the first spindle 4 and the effective differential pressure described above is stored.

The differential pressure information storage unit 222 is a function unit that stores information of a differential pressure between the first pressure measured by the first pressure sensor 3261 and the second pressure measured by the second pressure sensor 3271 along with information of the time elapsed from a predetermined timing. Instead of the information of the differential pressure, the differential pressure information storage unit 222 may store the information of the first pressure and the information of the second pressure along with the information of the time elapsed from the predetermined timing.

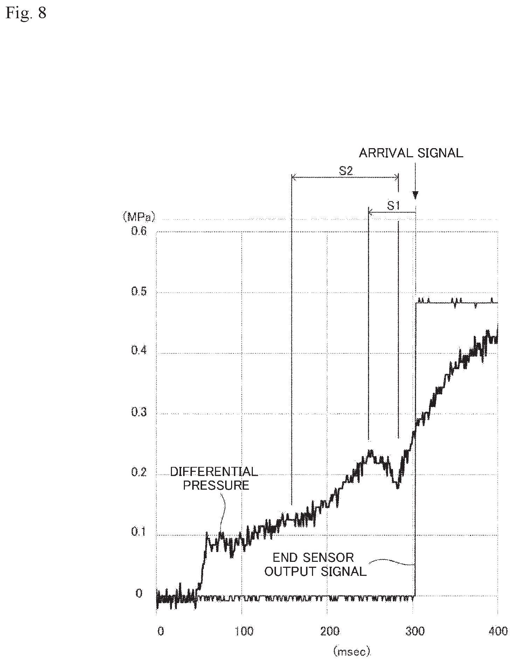

Fig. 8 is a graph illustrating the differential pressure produced when the first spindle 4 illustrated in Fig. 1 changes from the released state to the gripping state. Fig. 8 illustrates the differential pressure according to the elapsed time from the time when a switch command for switching from the released state to the gripping state is issued in the setup work or NC program as 0 msec. The differential pressure information storage unit 222 sequentially stores the information of the differential pressure shown in this graph as numerical information along with time information. Estimation operations for estimating the gripping force will be described below with reference to Fig. 7, while also referring to Fig. 8.

The set time storage unit 223 stores a time at which the effective differential pressure is expected to occur when driving the air cylinder 32 (see Fig. 2) to change the first spindle 4 from the released state to the gripping state. Specifically, a time S1 (see Fig. 8) is stored, taking the arrival signal generated when the end sensor 328 detects that the piston 322 (see Fig. 2) has moved furthest to the one side as a reference, the time S1 indicating how long before that point in time the effective differential pressure has occurred. The time S1 corresponds to an example of a predetermined time. If the shape of the cam surface 42a is the same, the time S1 is substantially a constant time regardless of the magnitude of the gripping force. This is because after the time when the effective differential pressure occurs, the claw distal end portion 43b (see Fig. 3) contacts the large diameter surface 42a3 (see Fig. 3) in which the diameter does not change, causing a large inertial force to act on the movement of the shifter 42 toward the rear end side and moving the piston 322 furthest to the one side in a substantially constant time. In the present embodiment, 50 msec is set as the time S1. This time S1 is set by the manufacturer of the NC lathe 1 performing an operation test, but may be changed by input from the operator.

When a switch command indicating a state change to the gripping state is issued, the control apparatus 2 switches the switching valve 35 to supply air to the first pressure chamber 324 and exhaust the air that had been in the second pressure chamber 325. The control apparatus 2 then calculates a differential pressure by subtracting the second pressure measured by the second pressure sensor 3271 from the first pressure measured by the first pressure sensor 3261, and sequentially saves, in the differential pressure information storage unit 222, the information of the differential pressure, which is the calculation result, in association with information of the time elapsed from when the switch command was issued. Fig. 8 illustrates an output signal of the end sensor 328 in addition to the stored differential pressure information. The signal indicated by the line rising above the output signal of the end sensor 328 is the arrival signal. Although the information of the differential pressure from the time when the switch command is issued to the time when the arrival signal is received is displayed in Fig. 8, the information of the differential pressure from the time of storage up to the time S1 may be deleted from or overwritten in the differential pressure information storage unit 222. This makes it possible to reduce the volume of the storage means 22. As illustrated in Fig. 8, the differential pressure gradually increases from the time when the switching valve 35 is switched. Then, when the claw distal end portion 43b reaches the boundary point between the varying surface 42a2 and the large diameter surface 42a3, the differential pressure, which was a maximum value until then, becomes the effective differential pressure, drops temporarily due to the claw distal end portion 43b passing the boundary point and recoiling, and then begins to rise again. In other words, the effective differential pressure can also be said to be a peak value that is a temporary peak in the differential pressure occurring when the claw distal end portion 43b reaches the boundary point between the varying surface 42a2 and the large diameter surface 42a3. Then, when the control apparatus 2 receives the arrival signal, the differential pressure slightly exceeds the aforementioned maximum value (peak value).

Once the control apparatus 2 receives the arrival signal, the estimation unit 23 obtains, from the differential pressure information storage unit 222, the differential pressure at the point in time earlier by the time S1 stored in the set time storage unit 223. That differential pressure is taken as the effective differential pressure, and the gripping force of the first spindle 4 is estimated from the relationship between the gripping force and the effective differential pressure stored in the conversion information storage unit 221. In addition, the estimation unit 23 determines whether the effective differential pressure is within a predetermined range, and determines that the gripping force is abnormal if the effective differential pressure is not within the predetermined range. The predetermined range of the effective differential pressure, which is the reference for determining that the gripping force is abnormal, is a numerical range input by the operator using the operating unit 11 in the setup work. However, this predetermined range may be set as a percentage, such as ±30%, relative to the effective differential pressure during the adjustment in the setup work. The predetermined range may also be set with a gripping force substantially synonymous with the predetermined range of the effective differential pressure.

The estimation unit 23 displays the estimated gripping force value and whether the gripping force is abnormal in the display unit 12. However, the estimation unit 23 may display only the value of the gripping force. In this case, the determination of an abnormal gripping force may be omitted. In addition, the estimation unit 23 may cause an indication that the gripping force is abnormal to be displayed only when the gripping force is abnormal. The operation of the estimation unit 23 is executed every time the state changes to the gripping state during the setup work and machining. However, the operation of the estimation unit 23 may be executed only during the setup work or only during machining. Furthermore, the operator may be allowed to select whether to execute the operation of the estimation unit 23 during each of the setup work and the machining. In addition, the control apparatus 2 may execute an emergency stop of the operation of the NC lathe 1 when the estimation unit 23 determines that the gripping force is abnormal.

According to the NC lathe 1 of the present embodiment described above, the gripping force of the collet chuck 48 is estimated on the basis of the differential pressure between the first pressure and the second pressure in the air cylinder 32, which is the drive source that causes the collet chuck 48 to narrow to bring the first spindle 4 into the gripping state, and thus the gripping force on the workpiece W1 can be estimated with a high level of accuracy. In addition, the gripping force can be estimated every time the workpiece W1 is gripped, both during setup work and during machining such as continuous machining using an NC program. Through this, an abnormal gripping force, such as a decrease in the gripping force due to wear of components constituting the collet opening/closing mechanism from the air cylinder 32 to the collet chuck 48, as well as peripheral components thereof, can also be determined during machining. Determining an abnormal gripping force during machining makes it possible to suppress production defects and therefore improves the productivity of the NC lathe 1. In addition, this configuration can be applied in an existing NC lathe 1 as well, by attaching the first pressure sensor 3261 and the second pressure sensor 3271 and adding or rewriting a control program of the control apparatus 2.

Although the maximum value of the differential pressure that appears when the claw distal end portion 43b reaches the boundary point between the varying surface 42a2 and the large diameter surface 42a3 may be difficult to recognize when the gripping force is set to a low force and the change in the differential pressure is gradual, due to external disturbances, or the like, the gripping force can be easily estimated even when the maximum value is difficult to recognize by taking the differential pressure time S1 previous to the arrival signal as the effective differential pressure. Moreover, since no work is needed to extract the maximum value, the computational amount is low, which reduces the burden on the control apparatus 2.

Furthermore, because the abnormal gripping force is determined and displayed in the display unit 12, the operator can easily recognize whether the gripping force is abnormal.

Although the collet opening/closing mechanism in the NC lathe 1 of the present embodiment has been described on the basis of the configuration of the first headstock 3 and the first spindle 4, a collet opening/closing mechanism having the same configuration as that of the first headstock 3 and the first spindle 4 is also provided in the second headstock 7 and the second spindle 8. Accordingly, although not described here, the gripping force on the cut-off workpiece W2 can be estimated by the estimation unit 23 for the second spindle 8 with a high level of accuracy, in the same manner as with the first spindle 4. Furthermore, because the second spindle 8 often grips the machined portion of the workpiece W1 machined by the first spindle 4 and the first tool post 6, the gripping force on the cut-off workpiece W2 can be estimated to detect machining defects in the gripped portion of the cut-off workpiece W2 gripped by the second spindle 8. In other words, if the gripping force on the cut-off workpiece W2 is significantly different from the desired gripping force, the machining of the gripped portion can be determined to be defective. Note that the cut-off workpiece W2 of the second spindle 8 corresponds to one example of a workpiece.

A variation on the estimation unit 23 will be described next. In the following descriptions, constituent elements having names identical to those of the constituent elements described thus far are assigned the same reference signs as those used thus far, and redundant descriptions thereof may be omitted.

The estimation unit 23 of the variation differs from that in the foregoing embodiment in that the maximum value of the differential pressure in a predetermined time range is used as the effective differential pressure to estimate the gripping force. The set time storage unit 223 according to the variation stores a time range S2 (see Fig. 8), taking the piston 322 having moved furthest to the one side as an arrival signal reception time point detected by the end sensor 328 as a reference, the time range S2 being a range in which the effective differential pressure may occur before that time point. The estimation unit 23 obtains information of the differential pressure in the time range S2 from the differential pressure information storage unit 222, and estimates the gripping force on the basis of the maximum value of the differential pressure in the time range S2. In the present variation, the time range S2 is set from 150 msec before the arrival signal to 20 msec before the arrival signal, excluding the differential pressure increase immediately preceding the arrival signal. Note that the entire range from the time when the switch command to switch to the gripping state is issued to 20 msec of the arrival signal may be taken as the time range S2. Note that this time range S2 is set by the manufacturer of the NC lathe 1, but may be changed by input from the operator.

In this variation, work for extracting the maximum value in the time range S2 is necessary, unlike in the foregoing embodiment, and thus the burden on the control apparatus 2 is increased. In addition, it is necessary for the differential pressure information storage unit 222 to store the differential pressure for a longer time than in the foregoing embodiment, large-capacity storage means 22 are provided. However, in addition to the effects of the foregoing embodiment, an effect such as being able to more accurately estimate the gripping force by finding the maximum value in the time range S2 is achieved.

The present invention is not limited to the embodiments described above, and may be modified in a variety of ways within the scope set forth in the claims. For example, the present embodiment has described an example in which the present invention is applied to what is known as a Swiss-type NC lathe 1 including the guide bush 5, but the present invention may be applied to other machine tools such as lathes and machining centers that do not include the guide bush 5. In addition, the second headstock 7 and the second tool post 9 may be omitted. Furthermore, the conversion information storage unit 221 may store information on the relationship between the gripping force and the effective differential pressure for each of characteristics, such as the material and shape of the workpiece W1. In that case, the estimation unit 23 may estimate the gripping force having selected information based on the characteristics of the workpiece W1 to be used from the information on the relationship between the gripping force and the effective differential pressure stored in the conversion information storage unit 221.

Note that constituent elements included only in the descriptions of the variations described above may also be applied to other variations.

### [Reference Signs List]

- 1: NC lathe (machine tool)
- 4: First spindle (spindle)
- 23: Estimation unit
- 32: Air cylinder (fluid pressure cylinder)
- 48: Collet chuck (gripping unit)
- 322: Piston
- 324: First pressure chamber
- 325: Second pressure chamber
- 3261: First pressure sensor
- 3271: Second pressure sensor
- W1: Workpiece

## Claims

1. A machine tool comprising:
a spindle including a gripping unit that grips a workpiece by narrowing and releases a grip on the workpiece by widening, the spindle rotating with a spindle axis as a rotation center;
a fluid pressure cylinder including a first pressure chamber and a second pressure chamber partitioned by a piston, the fluid pressure cylinder causing the gripping unit to narrow by supplying a fluid to the first pressure chamber to move the piston to one side, and causing the gripping unit to widen by supplying a fluid to the second pressure chamber to move the piston to the other side;
a first pressure sensor that measures a first pressure that is a pressure of the fluid supplied to the first pressure chamber when moving the piston to the one side;
a second pressure sensor that measures a second pressure that is a pressure of the fluid flowing out from the second pressure chamber when moving the piston to the one side; and
an estimation unit that estimates a gripping force of the gripping unit on the basis of a differential pressure between the first pressure measured by the first pressure sensor and the second pressure measured by the second pressure sensor.

2. The machine tool according to claim 1,
wherein the estimation unit estimates the gripping force on the basis of the differential pressure a predetermined time before a time when the piston reaches an arrival point on the one side.

3. The machine tool according to claim 1,
wherein the estimation unit estimates the gripping force on the basis of a maximum value of the differential pressure in a predetermined time range before a time when the piston reaches an arrival point on the one side.

4. The machine tool according to any one of claims 1 to 3,
wherein the estimation unit determines whether the differential pressure is within a predetermined range, and determines that a gripping force is abnormal if the differential pressure exceeds the predetermined range.
